(19) Europäisches Patentamt
European Patent Office
Office européen des brevets

(11) Publication number: **0 127 999**
**A1**

(12) **EUROPEAN PATENT APPLICATION**

(21) Application number: 84303617.9

(22) Date of filing: 29.05.84

(51) Int. Cl.³: C 01 G 1/10
C 01 B 13/14, C 22 B 15/08
C 02 F 1/72

(30) Priority: 03.06.83 GB 8315381

(43) Date of publication of application:
12.12.84 Bulletin 84/50

(84) Designated Contracting States:
BE DE FR NL

(71) Applicant: The BOC Group plc
Hammersmith House
London W6 9DX(GB)

(72) Inventor: Flatt, Richard Charles
7 Langdale Close
Wetherby West Yorkshire, LS22 4YE(GB)

(72) Inventor: Wilson, Stephen John
4a Wheatley Grove Ben Rhydding
Ilkley West Yorkshire(GB)

(74) Representative: Wickham, Michael et al,
c/o Patent and Trademark Department BOC Limited P O Box 39 Great West House Great West Road
Brentford Middlesex TW8 9DQ(GB)

(54) **Liquid phase oxidation.**

(57) A liquid phase oxidation reaction is carried out by withdrawing a stream aqueous reaction medium from a tank 2, heating it e.g. in heat exchanger 24 an then returning it to the tank 2. Once a chosen reaction temperature is attached oxygen is added to the stream in a venturi 18 and the heating is discontinued. The stream containing fine bubbles of oxygen is re-introduced into the tank through nozzles 30 so as to dissolve substantially all the oxygen. By avoiding evaporature losses caused by undissolved gas breaking the surface of the liquid phase, requirements for external heat can be minimised. Oxidation reactions involving the formation of salts from metals in acid media may be carried out by this method.

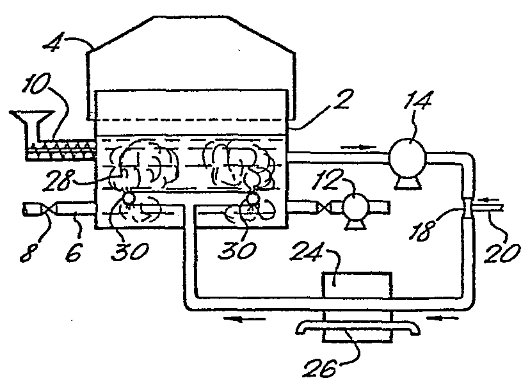


EP 0 127 999 A1

# LIQUID PHASE OXIDATION

This invention relates to liquid phase oxidations conducted in open tanks at elevated temperature in which oxygen is used as a reactant. By an open tank we mean a tank or other vessel in which the space above the liquid surface is maintained at atmospheric pressure by virtue of its being open to the atmosphere.

The oxygen may be a reactant taking a direct part in the formation of a product or may be a reactant taking part in an intermediate reaction. An example of the former kind of reaction is the use of oxygen to convert a metal salt in aqueous solution to a higher oxidation state and an example of the latter kind of reaction is the use of oxygen in the dissolution of metals in acids.

Normally, inorganic oxidation reactions that are conducted in aqueous solution are conducted at elevated temperature (typically in the range 60 to 90$^0$C) so as to accelerate the attainment of an end-point (or a satisfactory approach thereto). Air is generally used (on occasions oxidising agents such as hydrogen peroxide have been used, but their use has not proved satisfactory) as the source of oxygen. The air is generally bubbled through the liquid phase which is maintained in an open tank. In practice, a substantial excess of air over the stoichiometric requirement for oxygen is

required. In one example, which is typical, we have calculated that a mass of air some eighty times in excess of the stoichiometric requirement for oxygen is used. There is accordingly a substantial wastage of heat owing to evaporative heat losses from the tank. Such wastage of thermal energy is frequently exacerbated by the slowness of the reaction rate if one or more of the reactants is introduced into the tank in the solid phase, for example, in the preparation of salts in acidic media from metals, and also by the reduced solubility of air in aqueous media at elevated temperatures.

In French patent No. 756 364 U.S. patent specification No. 4251489 and French patent of addition No. 43 954 it is disclosed that copper sulphate can be made by dissolving copper in dilute sulphuric acid in an open or closed vessel in the presence of pure oxygen and with the reaction mixture being heated typically to a temperature of 70°C to 100°C. In practice, the cost of using closed reaction vessels has been prohibitive. Moreover, in such a closed system problems arise in handling undissolved oxygen passing into the ullage space of the reaction tank, particularly with regard to avoiding the formation of explosive or inflammable gas mixtures in the ullage space. Thus, the practical choice made by the chemical industry has generally been to employ open tanks in preference to closed tanks and there has been over the past 30 or 40 years a major capital expenditure on relatively large open tanks to carry out liquid phase oxidation reactions at elevated temperatures notwithstanding the large energy losses that are associated with the operation of these tanks. Indeed, we estimate that in the U.K. alone the annual energy losses involved run into tens of millions of pounds at 1984 prices. Moreover, to replace these tanks (or even to fix closures in position) would require an even larger capital expenditure. Thus, although a proposal for using a closed column or reactor for an effluent treatment of the type described in French patent application No. 2 427 307 would result in reduced operating costs, it would entail considerable capital cost and substantial difficulties would arise in handling reaction systems involving solid reactant(s) and/or solid product(s).

It is an aim of the present invention to provide a method of conducting liquid phase oxidations of the kind described above in a more efficient manner.

Accordingly, the present invention provides a method of oxidising chemically a chemical reactant in an aqueous reaction medium held at elevated temperature an open tank, in which method molecular oxygen is used as an oxidising agent, the oxygen typically being supplied to the aqueous reaction medium as bubbles (or formed into bubbles therein), and at least 90% of the oxygen supplied to said liquid phase is dissolved therein. Preferably, substantially all the said oxygen is dissolved, or otherwise consumed, in the liquid phase and for this purpose substantially pure oxygen is preferably employed as the oxidising agent, though, if desired, oxygen-enriched air may be used instead.

Surprisingly, there is no substantial difficulty in dissolving the oxygen in the liquid phase, particularly if substantially pure oxygen is used, typically provided that the oxygen is first formed into fine bubbles. Considering that oxygen is only sparingly soluble in water and other solvents at 15 to 20$^{o}$C, having regard to Henry's Law, it might be expected that at elevated temperatures substantial difficulties would arise in achieving dissolution, and if it is desired to make the best use of undissolved oxygen, this oxygen should be collected and returned to the reaction vessel as mentioned above.

We have realised however that notwithstanding the slowness of many oxidation reactions as conventionally performed using air as the source of oxygen, the reaction in the liquid phase between dissolved oxygen and an inorganic reactant is generally so fast that no equilibrium between the dissolved oxygen and oxygen gas is set up and that therefore Henry's Law is of relatively minor relevance. Therefore, a method of dissolving oxygen such as is described in U.K. patent specification No. 1 455 567 may be employed.

Moreover, if desired, the rate of supply of the oxygen may readily be matched to its rate of reaction in the liquid phase so that relatively low dissolved oxygen concentrations (typically less than 5ppm) may be maintained in the liquid phase.

The reaction medium is preferably agitated by introducing one or more pressurised streams of liquid into it.

Where available, existing tanks may be used to perform the method according to the invention. Otherwise, new tanks may be built to custom in order to perform the invention. The invention is particularly suitable for use in conjunction with tanks having a capacity greater than 10,000 litres.

The said oxygen is preferably introduced into a stream of the aqueous medium upstream of the tank. This stream is preferably the same one or ones that are used to agitate the liquid in the tank. There are several ways of efficiently dissolving oxygen in a stream of the liquid phase (formed e.g. by withdrawing it from a tank in which the liquid phase is held). The stream is typically subjected to pressure and oxygen is introduced into the stream. Turbulence is desirably created in the stream to form fine bubbles of oxygen, typically having a diameter of less than 1mm, and some of the oxygen is dissolved in said stream before returning the stream into said tank or introducing it into another. If desired, the stream carrying bubbles of oxygen may be caused to flow through a generally downwardly leading conduit and to undergo at least one reduction in velocity in said conduit (e.g. by forming the conduit such that it has a greater cross-sectional area at a downstream location than at a relatively upstream location) whereby larger bubbles of oxygen rise back to the region of turbulence owing to their buoyancy. Preferably, however, the stream is subjected to a pressure substantially greater than atmospheric, turbulence is created in said stream, oxygen is introduced into said stream, preferably through a venturi and the turbulence creates a dispersion of relatively small undissolved gas bubbles in said stream (in addition to the oxygen that dissolves) which advances with the stream which

is returned to the tank (or introduced into another tank) though one or more nozzles such that the resultant release of energy causes remaining small undissolved bubbles of oxygen to be sheared into even smaller bubbles which readily dissolve in the liquid phase in said tank. Such introduction of said stream into the liquid phase in the tank provides agitation for such liquid phase and will typically avoid the need to employ another form of stirring or agitation in such tank or vessel). The pressure employed may be selected to be sufficient to ensure that the volume of liquid withdrawn from the tank does not greatly exceed the volume of liquid phase in the tank, i.e. that the liquid is not (on average) recycled more than once.

A substantial and surprising amount of thermal energy can be saved by using the method according to the invention to conduct liquid phase inorganic oxidation reactions at ambient pressure, particularly, if substantially pure oxygen is used. Indeed, by employing the method according to the present invention the external heat requirements can be kept to not more than 1 MJ per Kg (and preferably not more than 0.2 MJ per Kg chemical oxygen demand). Indeed it will generally be possible to achieve a heat requirement of 0.1 MJ per Kg chemical oxygen demand. This compares with a heat requirement of 55 MJ per Kg chemical oxygen demand which is a typical figure for conventional practice. Such reductions are made possible first by substantially eliminating undissolved gas being vented to the atmosphere from the surface of the liquid in a tank in which the liquid phase is held and second by reducing the overall reaction time in consequence of using oxygen-enriched air or substantially pure oxygen. Using substantially pure oxygen it is possible to reduce reaction times up to five fold: moreover, substantially no more than the stoichiometric requirement for oxygen need be supplied (provided that all the oxygen is dissolved) - in a typical example one might supply up to 10% in excess to be certain that the whole stoichiometric requirement is dissolved.

If desired, the liquid withdrawn from the tank may be heated to meet at least part of and typically all the heat requirements of the reaction of reactions being carried out. The withdrawn stream may be heated indirectly for example by indirect heat exchange with steam. This is a more efficient method of heating than to use steam to heat a substantially stationery body of liquid (as is involved in conventional processes in which the liquid in the reaction tank is heated directly by passing steam therethrough or indirectly by use of steam-heated coils immersed in the tank). Furthermore, corrosion problems conventionally associated with immersed steam-heated coils can thus be avoided. Alternatively, the heat requirements may be met by electrically heating the liquid phase in the tank.

The withdrawn stream is typically pressurised to 2 to 4 atmospheres.

With most reactions it is typically possible to avoid heating the liquid phase by external means once a chosen reaction temperature has been established which will take only a small fraction of the total reaction time. This result can be achieved as a consequence of the substantial reduction in evaporative heat losses made possible by the method according to the present invention provided it is possible to balance the heat evolved by the oxidation reaction with the heat lost to the environment through evaporation and otherwise. Moreover, in many reaction systems, it will be desirable actually to provide cooling to the aqueous reaction medium. This may be done by spraying with relatively cold water a pipe used to convey the stream to the tank.

The method according to the invention offers considerably flexibility in choosing a desired working or reaction temperature. Conventionally, the liquid phase oxidation reactions to which this invention relates are conducted in the range 50 to 80$^{\circ}$C, and there is generally an upper limit on the working temperature in that the cost of providing the necessary thermal energy to exceed that temperature is not met by the reduction in reaction time achieved. In general, however, there is no such upper limit on the working temperature when the method according to the invention is performed

and accordingly any working temperature between, say, 50°C and the boiling point of the liquid phase may be selected, temperatures typically above 80°C and sometimes 90°C or above being preferred.

Where the reaction or reaction system is of a kind that in practice makes it difficult or impossible to achieve 100% yields the method according to the present invention typically makes it possible to increase the yield. An example of such a kind of reaction system is one involving the formation of salts in acid media group metals. Typically in such a system there may be a greater demand for oxygen at the start of the reaction than the end. The rate of adding oxygen may be varied as the reaction proceeds. Indeed, as the reaction approaches its end-point it may be desirable to reduce the rate at which oxygen is added. If desired, more than one stream may be oxygenated when the demand for oxygen is at a maximum, and then the number of streams oxygenated may be reduced when the demand is less.

The liquid phase oxidation reactions of the kind described herein are generally performed on a batch or semi-continuous basis. The invention makes possible substantial reduction in batch time and/or substantial increases in production rates. Moreover, particularly, if the reactant(s) other than oxygen are all in the liquid phase, the oxidation stream of the liquid phase. Indeed, although we believe theoretically in some instances it will be possible to complete the oxidation reaction in such stream thereby making possible continuous operation of a process of which the reaction forms a part, we prefer to complete or perform all of the oxidation reaction in the tank.

The method according to the present invention is particularly suited to performing reactions involving the increase in oxidation state of a metal. Such reactions include the production of metal oxides and hydroxides from metal salts under alkaline or acid conditions. For example, oxides and hydroxides of transition elements such as iron, copper, titanium, vanadium, chromium, manganese and nickel can be

formed by the method according to the invention. Many pigments are made commercially by such reactions. The use of the method according to the present invention makes possible of accurate control of oxidising conditions for example to maximise yield of the desired product where it is formed in competition with other products either of different chemical composition or crystal lattice.

The method according to the present invention is also particularly suited to the carrying out of oxidation reactions in which metals are converted in acidic solution to salts. A typical example of such a process is the formation of copper sulphate from suplhuric acid and copper metal. A wide range of salts are made commercially by such reactions. Examples include lead acetate, lead sulphate, cadmium sulphate, cadium acetate, copper acetate, copper naphthenate, iron sulphate, iron acetate, iron oxalate, lead naphthenate, nickel sulphate, tin chloride, tin sulphate and tin acetate. Lead acetate is of particular importance as an intermediate in the manufacture of lead chromate and lead carbonate pigments. This type of reaction is also use in induatrial processes such as pickling (in which the metal to be pickled is treated with a dilute mineral acid (typically sulphuric acid) and the recovery of precious metals such as silver, gold and platinum from residues typically containing, say, copper and nickel in addition to the precious metal. In such a recovery process dilute sulphuric acid is typically employed as the leaching agent. The oxidation reactions conducted under acidic conditions are generally slower than those which take place under alkaline conditions, and thus the method according to the invention is of particular value in carrying out such reactions.

Some commercial production processes include both the types of reaction mentioned above, namely, first the dissolution of a metal in an acidic reaction medium to form a solution of a salt and then oxidation of the salt to an oxide or hydroxide. These reactions may be performed by the method according to the invention in sequence in the same tank, or in separate tanks.

The method according to the present invention may also be employed in the formation of metal salts by dissolving the parent metal under alkali conditions (e.g. the formation of a stannate by dissolving tin on an alkali). It may further be employed in dissolving precious metals (such as silver and gold) in cyanide solution. In addition the method may be used in the oxidation of metal sulphites to sulphates in acid media (such reactions often being performed in the recovery of metals from their ores), for example the oxidation of copper sulphide or nickel sulphide to copper sulphate or nickel sulphate respectively.

A method according to the present invention will now be described by way of example with reference to the accompanying drawing which is a schematic diagram of a plant for carrying out the method according to the invention.

Referring to the drawing, an open tank 2 has a cowl 4 to reduce evaporative heat losses. The tank may be provided with one or more inlets 6 for liquid reactants (only one such inlet is shown in the drawings), having a valve 8 disposed therein. The tank may also be provided with one or more feeders 10 for introducing solid reactant(s) thereto. (Alternatively solid reactant(s) may be lowered into the tank). The tank 2 may additionally be provided with a pump 12 or other means for withdrawings product therefrom. The pump 12 communicates with an outlet pipe 13 having a valve 15 disposed therein. All these features of the tank are conventional and there is a wide range of choice in selecting means for introducing reactants (other than oxygen) into the tank and for withdrawing product therefrom, be it in the form a solution or a precipitate.

In accordance with the invention, a pump 14 is operable to withdraw a stream of liquid from the tank 2 and to raise its pressure to a chosen superatmospheric pressure. The pump 14 on its outlet side communicates with a venturi 18, which in operation is adapted to induce a flow of oxygen into the pressurised stream from a pipe 20

which is able to be placed in communication with a source (not shown) of commercially pure oxygen (i.e. containing less than 0.1% by volume of impurities).

The flow of the pressurised stream through the venturi 18 creates considerable turbulence therein, and this turbulence is effective to help form relatively small bubbles of oxygen, some but typically not the majority of which dissolve in the stream. The undissolved bubbles are carried in dispersion in the stream, the velocity of the stream being chosen to be above a minimum that ensure that there is no substantial coalescence of the dispersed bubbles.

The stream carrying the undissolved bubbles passes through a heat exchanger 24 in which it can be heated by means of a hot fluid e.g. steam passing countercurrently therethrough (one or more passages 26 being provided in the heat exchanger 24) for the flow of the steam.

From the heat exchanger 24, the stream returns to the liquid phase 28 in the tank 2, the flow being divided into two parts, each part of the flow being introduced into the tank 2 through a nozzle 30 adapted to convert the energy contained in the stream into turbulence in the liquid phase 28 whereby remaining undissolved bubbles of oxygen are sheared into even finer bubbles that rapidly dissolve in the liquid phase and whereby the liquid phase is thoroughly aditated. The pressure to which the pump 14 raises the liquid withdrawn from the tank 2 and the number, form and location of the nozzles 30 are selected so as to ensure complete agitation of the liquid. Such agitation helps to maintain substantially uniform conditions throughout the liquid phase and to keep any solid particulate reactant or product in suspension. It is generally found that substantially all the oxygen that is added is dissolved in the liquid and substantially no oxygen comes out of solution to be vented from the tank 2.

In operation, the liquid phase 28 in the tank 2 may be raised to a reaction temperature be heating it in the heat exchanger 24 and then returning it to the tank 2. Until the chosen temperature in the tank 2 is reached typically no oxygen is supplied to the pipe 20.

Once the working temperature has been reached, the oxygen supply is commenced. Depending on the enthalpy of the oxidation reaction, its rate, and the rate of heat loss from the tank 2 and associated pipework (which may, if desired, be thermally insulated) no extra external heat need be supplied and thus the passage of steam through the heat exchanger 24 may be discontinued on reaching the working temperature, and only recommenced if the working temperature falls below the chosen temperature. If necessary, the stream may be cooled, (e.g. by spraying a pipe that covers it with water) in order to prevent the heat generated during the exothermic oxidation reaction from raising the temperature of the liquid in the tank above the chosen working temperature.

In the manufacture, of, say, copper sulphate by a method according to the invention, the reactants supplied to the tank 2 are, in addition to oxygen, copper metal (say in the form of copper turnings) and dilute sulphuric acid. The chosen reaction temperature may be 95$^{o}$C. The total heat input via heat exchanger 24 may be in the order of 0.1 MJ per Kg chemical oxygen demand which can be calculated from the following equation.

$$O_2 + 4H^+ \rightarrow 2\ Cu^{2+} + 2H_2O$$

In the manufacture of, say, ferric sulphate by a method according to the invention, the reactants supplied to the tank 2 are ferrous sulphate solution and dilute sulphuric acid. The chosen reaction temperature may be 95$^{0}$C. The total heat input via heat exchanger 24 may be in the order of 01. MJ per Kg chemical oxygen demand, which demand can be calculated from the following equation.

$$O_2 + 4H^+ + 4Fe^{2+} \rightarrow 4Fe^{3+} + 2H_2O$$

The term 'liquid phase oxidation' as used herein is used to indicate that the oxygen reacts in the liquid phase.

## CLAIMS

1. A method of oxidising chemically a chemical reactant in an aqueous reaction medium held at elevated temperature in an open tank, in which method molecular oxygen is used as an oxidising agent, the oxygen typically being supplied to the aqueous medium as bubbles (or formed into bubbles therein), and at least 90% of the oxygen supplied to said liquid phase is dissolved therein.

2. A method as claimed in claim 1, in which the reaction medium is agitated by introducing a pressurised stream of liquid into it.

3. A method as claimed in claim 2, in which a dispersion of oxygen bubbles is formed in said pressurised stream.

4. A method as claimed in any one of the preceding claims, in which the requirement for external heat for the aqueous medium is kept to no more than 0.IMJ per Kg of chemical oxygen demand.

5. A method as claimed in any one of the preceding claims in which once a chosen reaction temperature is attained substantially no external heat is used to keep the oxidation reaction proceeding.

6. A method as claimed in any one of the preceding claims, in which the said stream is cooled to remove excess heat generated by the oxidation reaction.

7. A method as claimed in any one of the preceding claims in which the oxidation reaction takes place to some extent in said stream and proceeds in said tank.

8. A method as claimed in any one of claims 1 to 6, in which the reactions proceed entirely in the tank.

9. A method as claimed in any one of the preceding claims, in which a metal is oxidised in acid solution to a metal salt.

10. A method as claimed in claim 9, in which said salt is then converted to an oxide or hydroxide.

11. A method as claimed in any one of the preceding claims in which more than one such stream is oxygenated during at least a part of the period in which the oxidation reaction takes place.

12. A salt, oxide or hydroxide when prepared by a method as claimed in any one of the preceding claims.

1/1

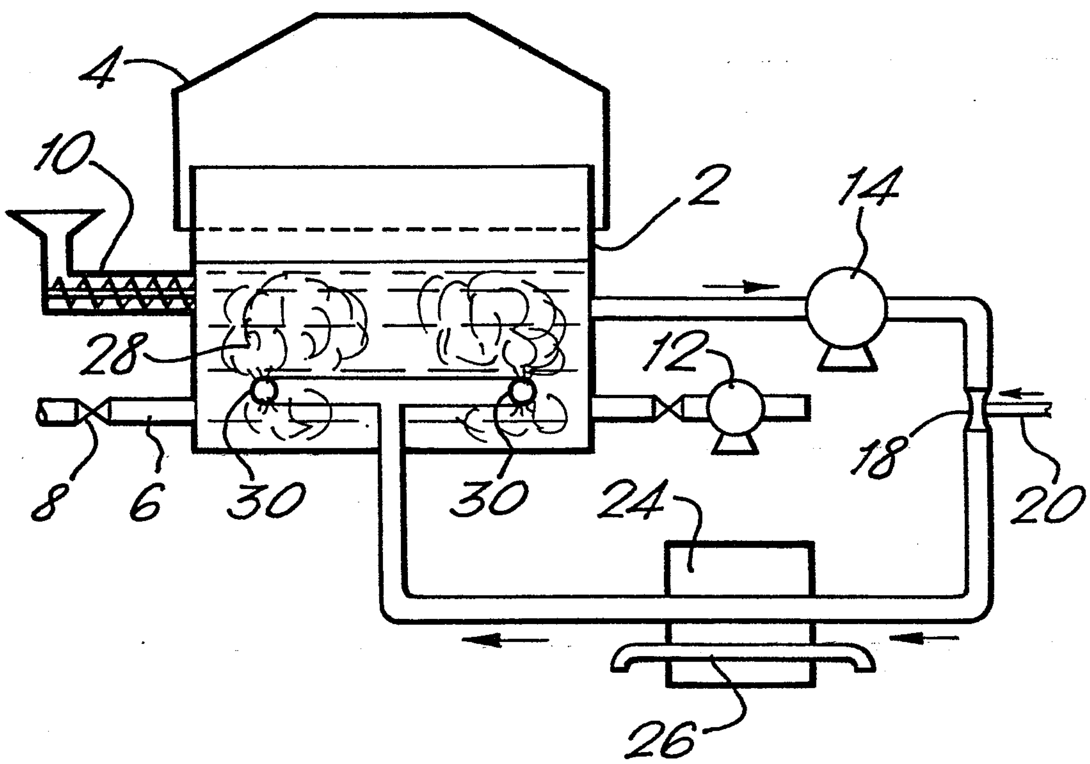

European Patent Office

# EUROPEAN SEARCH REPORT

0127999

Application number

EP 84 30 3617

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,X | FR-A-2 427 307 (L'AIR LIQUIDE)<br>* Page 7, claims 1-5; page 4, lines 7-21 *<br>--- | 1,4,5, 8 | C 01 G 1/10<br>C 01 B 13/14<br>C 22 B 15/08<br>C 02 F 1/72 |
| D,X | US-A-4 251 489 (NORDDEUTSCHE AFFINERIE)<br>* Column 1, "Objects of the invention" - column 3, line 8; column 4 "specific example" *<br>--- | 1,7-9 | |
| D,X | FR-A- 756 364 (H. WISMER)<br>* Page 1, lines 1-25 *<br>--- | 1,8,9 | |
| D,A | DE-B-1 040 030 (H. FEHR)<br>* Column 1, lines 1-4; column 3, line 30 - column 4, line 67; column 5, lines 28-50; column 6, lines 3-33, 41-52; column 9, lines 14-37 *<br>--- | 1-3,7 | TECHNICAL FIELDS SEARCHED (Int. Cl. 3) |
| D,A | FR-E- 43 954 (H. WISMER)<br>* Page 1, lines 21-27 *<br>--- | 4-6 | C 02 F<br>C 07 C<br>C 22 B<br>C 01 G |
| D,A | GB-A-1 455 567 (BOC)<br>* Page 9, claims 1,8,11,14,17,23,24 *<br>--- | 1-3,7 | |
| A | GB-A- 940 555 (DRYSDALE)<br>* Page 2, claims 1-6 *<br>----- | 1-3 | |

The present search report has been drawn up for all claims

| Place of search | Date of completion of the search | Examiner |
|---|---|---|
| THE HAGUE | 23-08-1984 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82